(19)

Europäisches
Patentamt
European
Patent Office
Office européen
des brevets

(11) **EP 3 885 669 A1**

(12) **EUROPEAN PATENT APPLICATION**

(43) Date of publication:
**29.09.2021 Bulletin 2021/39**

(51) Int Cl.:
*F25B 1/00* (2006.01)     *F25B 49/02* (2006.01)

(21) Application number: **21165036.1**

(22) Date of filing: **25.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2020  IT 202000006331**

(71) Applicant: **Mitsubishi Electric Hydronics & IT Cooling Systems S.p.A.**
**36061 Bassano del Grappa (Vicenza) (IT)**

(72) Inventors:
• PELOSO, Davide
  36061 BASSANO DEL GRAPPA (VI) (IT)
• SOMMAVILLA, Michele
  36061 BASSANO DEL GRAPPA (VI) (IT)
• TREVISAN, Marco
  36061 BASSANO DEL GRAPPA (VI) (IT)
• GENTILE, Gabriele
  36061 BASSANO DEL GRAPPA (VI) (IT)

(74) Representative: **Bongiovanni, Simone et al**
**Studio Torta S.p.A.**
**Via Viotti, 9**
**10121 Torino (IT)**

(54)    **METHOD FOR CONTROLLING A REFRIGERANT CIRCUIT  BY DETERMINING THE SUPPLY VOLTAGE OF A FAN COUPLED WITH A CONDENSER OF THE REFRIGERANT CIRCUIT**

(57)    Method for controlling a refrigerant circuit (1) by for determining the supply voltage of a fan coupled with a condenser of a refrigerant circuit comprising an evaporator, a condenser and a compressor, the method comprising the following steps: measuring (100) the pressure $P_{ev}$ of the evaporator; measuring (110) the pressure $P_{cond}$ of the condenser; calculating (120) a pressure ratio $P_r$ between the pressure $P_{cond}$ of the condenser and pressure $P_{ev}$ of the evaporator; determining (140) the power demand of the compressor $C_{pr-demand}$; calculating (160) an optimized supply voltage $V_{BEST-EER}$ of the fan of the based on the calculated pressure ratio $P_r$ and based on the determined power demand $C_{pr-demand}$; and supplying to the fan a voltage corresponding to the optimized supply voltage $V_{BEST-EER}$. (Figure 2)

FIG. 1

EP 3 885 669 A1

**Description**

**CROSS-REFERENCE TO RELATED APPLICATIONS**

This patent application claims priority from Italian patent application no. 102020000006331 filed on 25/03/2020.

**TECHNICAL FIELD**

The present invention relates to a method for controlling a refrigerant circuit by determining the supply voltage of a fan coupled with a condenser of the refrigerant circuit.

**BACKGROUND OF THE INVENTION**

A refrigeration circuit processes a refrigerant through a refrigeration cycle in a closed loop and includes a compressor, a condenser, one or more fans coupled with the condenser and designed to blow air across the condenser to produce an air stream for cooling the refrigerant in the condenser, an expansion valve and an evaporator.
A drive unit is provided to supply a controlled voltage to the motor of the fan to regulate the fan speed and the quantity of air that is supplied to the condenser. An high pressure side of the loop extends from the compressor to the condenser and a low pressure side extends from the expansion valve through the evaporator to the compressor.
According to EP-1.379.817 it is provided a variable capacity cooling system to cool refrigerant in the condenser and a controller that monitors the pressure associated with the low side of the system. The controller adjusts the variable capacity cooling system based on the measured pressure, while maintaining an acceptable pressure in the low pressure side of the system.
The scope of the present invention is to ncrease the efficiency of the control of fan speed. More specifically the scope of the application is to reduce the overall power absorbed by the refrigerant circuit (compressors and fans) and consequently to increase the EER (efficiency ratio) of the refrigerant circuit.
US US5873257A describes a purge prevention method in a centrifugal compressor.

**SUMMARY OF THE INVENTION**

The above aim is obtained by the present invention that relates to a method for controlling a refrigerant circuit by determining the supply voltage of a fan coupled with a condenser of the refrigerant circuit.

**BRIEF DESCRIPTION OF DRAWINGS**

For a better understanding of the present invention, a preferred embodiment is described in the following, by way of a non-limiting example, with reference to the attached drawings wherein:

Figure 1 shows schematically a refrigerant circuit;
Figure 2 shows schematically the operations of the method for controlling a refrigerant circuit by determining the supply voltage of a fan coupled with the condenser of a refrigerant circuit according to present invention; and
Figure 3 details operations of the present invention.

**DETAILED DESCRIPTION OF THE INVENTION**

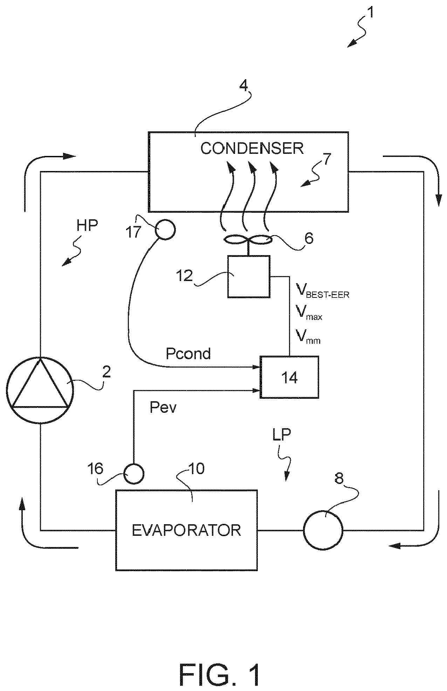

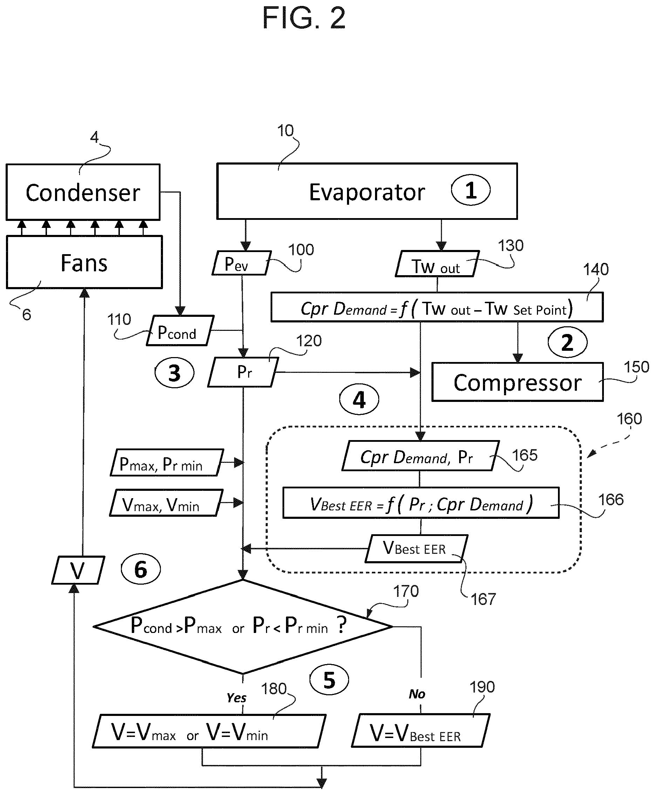

The refrigeration circuit is generally designated by reference number 1 and shown in a schematic diagram in Figure 1. The refrigeration circuit 1 processes a refrigerant through a refrigeration cycle in a closed loop in the direction indicated by the arrows. The circuit 1 includes a compressor 2, which is preferably a variable capacity compressor or compressor system, a condenser 4, one or more fan 6 coupled with the condenser 4 and designed to blow air across the condenser 4 produce an air stream 7 for cooling the refrigerant in the condenser 4, an expansion valve 8, and an evaporator 10. An high pressure side HP of the loop extends from the compressor 2 to the condenser 4 and a low pressure side LP extends from the expansion valve 8 through the evaporator 10 to the compressor 2.
Numeral 12 indicates a drive unit designed to supply a controlled voltage to the motor of the fan 6 to regulate fan speed and the quantity of air that is supplied to the condenser 4. An electronic control unit 14 implements the control logic according to the present invention.
According to the control logic of the present invention the following operations are performed (figure 2):

The pressure $P_{ev}$ of the evaporator 10 is measured (block 100, the pressure or the evaporator $P_{ev}$ is measured by

means of a sensor 16 according to known techniques, we refer to figure 1);

The pressure $P_{cond}$ of the condenser 4 is measured (block 110, the pressure or the condenser is also concurrently (i.e. at the same time) measured by means of a sensor 17 - figure 1 - according known techniques);

A pressure ratio $P_r$ between the pressure $P_{cond}$ of the condenser 4 and the pressure $P_{ev}$ of the evaporator 10 is calculated (block 120), i.e.

$$P_r = P_{cond} / P_{ev}$$

The temperature $T_{wout}$ of the cooled fluid that is cooled by the evaporator 10 is measured (block 130) by means of sensors utilizing known techniques. As it is known cooled fluid circulates in a closed loop circuit and it is used to cool air using a number of heat exchangers.

It is determined (block 140) the power demand $C_{pr-demand}$ of the compressor 2 based on a function $f_1$ that takes into consideration the difference between the measured fluid temperature $T_{wout}$ and a target fluid temperature $T_{wset-point}$, i.e.:

$$C_{pr-demand} = f_1 (T_{wout} - T_{wset-point}).$$

The function $f_1$ of known kind establishes a direct correspondence with the difference, i.e. larger is the difference greater is the power demand of the compressor $C_{pr-demand}$.

The compressor 2 is controlled according to known techniques so that the compressor 2 outputs the determined power demand $C_{pr-demand}$ (block 150).

Based on the present invention a calculation (block 160) of an optimized supply voltage $V_{BEST-EER}$ of the fan 6 of the condenser 4 is performed, such a calculation is based on the calculated pressure ratio $P_r$ and is also based on the determined power demand $C_{pr-demand}$ (block 165).

The optimized supply voltage $V_{BEST-EER}$ is calculated (block 166) as a function $f_2$ of the calculated pressure ratio $P_r$ and power demand $C_{pr-demand}$, i.e.:

$$V_{BEST-EER} = f_2 (P_r, C_{pr-demand})$$

The used function is designed to calculate an optimized supply voltage $V_{BEST-EER}$ **theta** is designed to maximize the overall efficiency of the refrigeration circuit by reducing the power absorbed by the compressor and the fan.

The calculated value of optimized supply voltage $V_{BEST-EER}$ is then memorized (block 167).

According to a preferred embodiment function $f_2$ is realized by means of a mathematical function (for instance:

$$V_{BEST\ EER} = C_0 + C_1 * C_{pr-demand} + C_2 * C_{pr-demand}^2 + C_3 * P_r + C_4 * P_r^2 + C_5 * C_{pr-demand} *$$

$$P_r + C_6 * C_{pr-demand}^2 * Pr + C_7 * P_r^2 * C_{pr-demand} + C_8 * C_{pr-demand}^2 * P_r^2$$

Wherein $C_0$ ... $C_8$ are numerical parameters.

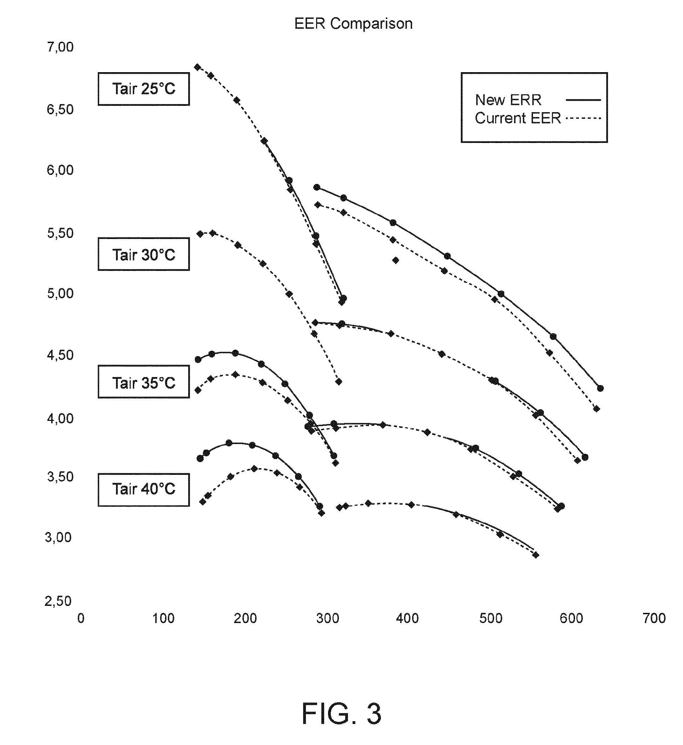

Figure 3 shows graphically the function linking power demand $C_{pr-demand}$ (input value kW) to the optimized supply voltage $V_{BEST-EER}$ (output value) by means of a number of not linear curves (preferably arch-shaped) that are dependent on the values of the pressure ratio $P_r$.

Figure 3 highlights the benefits in terms of increasing EER (total efficiency of the machine) through the use of the method claimed in this patent ("New EER" curve with respect to the "actual" curve).

Before supplying the fan motor with a voltage corresponding to $V_{BEST-EER}$ further control operation are performed (block 170).

The above further control operations comprise the flowing checks:

First check - Checking if the pressure $P_{cond}$ of the condenser 4 (i.e. on the HP side) is greater than a limit value **Pmax;**
Second check - Checking if the pressure ratio $P_r$ is smaller than pressure ratio limit $P_{rmin}$.

If the condition of the first check is satisfied ($P_{cond} > P_{max}$ = **YES**) the voltage supplied to the fan is limited to a maximum voltage $V_{max}$ and the calculated optimized supply voltage $V_{BEST-EER}$ is not used (block 180).

If the condition of the second check is satisfied ($P_r < P_{min}$ = **YES**) the voltage supplied to the fan is limited to

a minimum voltage $V_{min}$ and the calculated optimized supply voltage $V_{BEST-EER}$ is not used (block 190) .

If none of the above checks is satisfied (i.e. $P_{cond} > P_{max}$ = NO AND $P_r < P_{min}$ = NO) the memorized optimized supply voltage $V_{BEST-EER}$ is used (block 190) to determine the value of the voltage supplied to the fan 6.

## Claims

1. Method for controlling a refrigerant circuit (1) by determining the supply voltage of a fan (6) coupled with a condenser (4) of the closed loop refrigerant circuit (1) comprising a compressor (2), said condenser (4) an expansion device (8) and an evaporator (10), the method comprising the following steps:

   measuring (100) the pressure $P_{ev}$ of the evaporator (10);
   measuring (110) the pressure $P_{cond}$ of the condenser (4);
   calculating (120) a pressure ratio $P_r$ between the pressure $P_{cond}$ of the condenser and the pressure $P_{ev}$ of the evaporator and;
   determining (140) the power demand $C_{pr-demand}$ of the compressor (2);
   calculating (160) an optimized supply voltage $V_{BEST-EER}$ of the fan (6) based on the calculated pressure ratio $P_r$ and based on the determined power demand $C_{pr-demand}$; and
   supplying (12) to the motor of the fan (6) a voltage corresponding to the optimized supply voltage $V_{BEST-EER}$.

2. Method as claimed in claim 1, wherein the step of determining (140) the power demand of the compressor $C_{pr-demand}$ is based on a function $f_1$ that takes into consideration the difference between a measured fluid temperature $T_{wout}$ supplied by the evaporator (10) and a target fluid temperature $T_{wset-point}$, of the evaporator: $C_{pr-demand} = f_1 (T_{wout} - T_{wset-point})$.

3. Method as claimed in claim 1 or 2, wherein control operations are performed (170) before supplying the fan with a voltage corresponding to the optimized supply voltage $V_{BEST-EER}$.

4. Method as claimed in claim 3, wherein control operations comprise a first test by checking if the pressure of the condenser $P_{cond}$ is greater than a limit value $P_{max}$; if the condition of the first check is satisfied ($P_{cond} > P_{max}$ = YES) the voltage supplied to the fan is limited to a maximum voltage $V_{max}$ and the calculated optimized supply voltage $V_{BEST-EER}$ is not used (180) .

5. Method as claimed in claim 4, wherein control operations comprise a second test by checking if the pressure ratio $P_r$ is smaller than pressure ratio limit $P_{rmin}$;
   if the condition of the second check is satisfied ($P_r < P_{min}$ = YES) the voltage supplied to the fan is limited to a minimum voltage $V_{min}$ and the calculated optimized supply voltage $V_{BEST-EER}$ is not used (180) .

6. Refrigerant circuit (1) comprising a compressor (2), a condenser (4) coupled with a fan (6), an expansion device (8) and an evaporator (10), the circuit comprising an electronic control unit (14) designed to:

   measuring (100) the pressure $P_{ev}$ of the evaporator (10);
   measuring (110) the pressure $P_{cond}$ of the condenser (4);
   calculating (120) a pressure ratio $P_r$ between the pressure $P_{cond}$ of the condenser and the pressure $P_{ev}$ of the evaporator;
   determining (140) the power demand $C_{pr-demand}$ of the compressor (2);
   calculating (160) an optimized supply voltage $V_{BEST-EER}$ of the fan (6) based on the calculated pressure ratio $P_r$ and based on the determined power demand $C_{pr-demand}$; and
   the circuit further comprising a drive unit (12) supplying (12) to the motor of the fan (6) a voltage corresponding to the optimized supply voltage $V_{BEST-EER}$.

FIG. 1

# FIG. 2

FIG. 3

Europäisches
Patentamt

European
Patent Office

Office européen
des brevets

## EUROPEAN SEARCH REPORT

Application Number

EP 21 16 5036

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 873 257 A (PETERSON GREGORY E [US]) 23 February 1999 (1999-02-23) | 1-3,6 | INV. F25B1/00 F25B49/02 |
| A | * column 2, line 45 - column 9, line 19; figures 1-3 * | 4,5 | |
| X | US 2019/226706 A1 (LIU WENQIAN [US] ET AL) 25 July 2019 (2019-07-25) | 1,6 | |
| A | * paragraphs [0056], [0059] * | 2-5 | |
| X | EP 0 355 180 A2 (NIPPON TELEGRAPH & TELEPHONE [JP]) 28 February 1990 (1990-02-28) | 1,6 | |
| A | * page 7, lines 10-21 * | 2-5 | |

TECHNICAL FIELDS
SEARCHED      (IPC)

F25B

The present search report has been drawn up for all claims

| Place of search | Date of completion of the search | Examiner |
|---|---|---|
| Munich | 11 June 2021 | Gasper, Ralf |

EPO FORM 1503 03.82 (P04C01)

## ANNEX TO THE EUROPEAN SEARCH REPORT
## ON EUROPEAN PATENT APPLICATION NO.

EP 21 16 5036

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2021

| Patent document cited in search report | | Publication date | Patent family member(s) | | Publication date |
|---|---|---|---|---|---|
| US 5873257 | A | 23-02-1999 | NONE | | |
| US 2019226706 | A1 | 25-07-2019 | CA | 3029520 A1 | 22-07-2019 |
| | | | US | 2019226706 A1 | 25-07-2019 |
| EP 0355180 | A2 | 28-02-1990 | CA | 1322858 C | 12-10-1993 |
| | | | DE | 3877752 T2 | 13-05-1993 |
| | | | EP | 0355180 A2 | 28-02-1990 |

EPO FORM P0459

For more details about this annex : see Official Journal of the European Patent Office, No. 12/82

**EP 3 885 669 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102020000006331
- EP 1379817 A
- US 5873257 A